# EUROPÄISCHE PATENTANMELDUNG

(11) **EP 4 026 677 A1**
(43) Veröffentlichungstag der Anmeldung: **13.07.2022**
(21) Anmeldenummer: 21150912.0
(22) Anmeldetag: 11.01.2021
(51) Int. Cl.: B29C 43/00, B29C 43/56, B29K 79/00, B29K 105/00

(54) **VERFAHREN ZUR WECHSELFELD UNTERSTÜTZTEN VERDICHTUNG VON POLYIMID PULVER**

(71) Anmelder: Evonik Fibres GmbH, 4861 Schörfling am Attersee (AT)
(72) Erfinder: STENNER, Patrik, 63452 Hanau (DE); TECLE, Yikalo-Eyob, 63065 Offenbach (DE); MAURER, Christian, 43701 Zanesville (US); DANZER, Dieter, 4663 Laakirchen (AT); GÖTZENEDER, Jürgen, 4880 St. Georgen im Attergau (AT); KILIAN, Philipp, 50599 Frankfurt (DE); SCHMITT, Günter, 64291 Darmstadt (DE)
(74) Vertreter: Evonik Patent Association

(57) **Zusammenfassung**

Gegenstand der Erfindung ist ein Verfahren zur Verdichtung von Polyimid Pulver zu einem Polyimid Presskörper, indem Polyimid Pulver in eine elektrisch leitfähige Sinterform eingebracht wird, anschließend mittels zumindest eines elektrisch leitfähigen Presswerkzeugs verdichtet wird, wobei an die Sinterform und an das oder die Presswerkzeuge ein elektrisches Wechselfeld gelegt wird, ohne ein Plasma zu zünden.

## Beschreibung

Die Erfindung betrifft ein Verfahren zur Verdichtung von Polyimid Pulver zu einem Polyimid Presskörper, indem Polyimid Pulver in eine elektrisch leitfähige Sinterform eingebracht wird, anschließend mittels zumindest eines elektrisch leitfähigen Presswerkzeugs verdichtet wird, wobei an die Sinterform und an das oder die Presswerkzeuge ein elektrisches Wechselfeld gelegt wird, ohne ein Plasma zu zünden.

Im Stand der Technik ist Formpressen ein Herstellungsverfahren für Kunststoffteile, das in der Serienproduktion für Bauteile verwendet wird. Eines der Einsatzgebiete dieses Verfahrens ist z.B. die Automobilindustrie, wo es zur Produktion größerer Bauteile mit zweidimensionaler oder dreidimensionaler Struktur, wie zum Beispiel Motorhauben, Stoßfänger, Spoiler, Innenraumverkleidungen oder Heckklappen eingesetzt wird. Es können sowohl duroplastische als auch thermoplastische Kunststoffe verarbeitet werden.

Der zu Beginn der Verarbeitung als Pulver oder Granulat vorliegende Kunststoff wird in ein Gesenk oder in eine Sinterform eingebracht, die aufgeheizt wird. Durch den Einsatz eines Presswerkzeuges wird Druck auf das Pulver oder Granulat ausgeübt, so dass es auf die gewünschte Form verdichtet wird. Bei duroplastischen Kunststoffen dient die Temperatur zur Beeinflussung des Aushärtevorgangs, bei Thermoplasten zum Schmelzen des Kunststoffs. Nach dem Abkühlen wird der fertige Presskörper aus dem Formwerkzeug entnommen und kann weiterverarbeitet werden.

Der ständigen Verbesserung der Verfahren der Formpressung wird große Aufmerksamkeit gewidmet. Eine Möglichkeit, mittels Sintern unter Erzeugung eines Plasmas Presskörper im Labormaßstab zu erhalten, wird im Aufsatz von Olliver Guillon et al., "Field-Assisted Sintering Technology/Spark Plasma Sintering", Advanced Engineering Materials, Seite 830 ff, DOI: 10.1002/adem.201300409, vorgeschlagen.

Wirtschaftlich arbeiten Verfahren des Formpressens jedoch erst dann, wenn die gewünschten Presskörper für mannigfache Anwendungen im industriellen Maßstab, unter minimalem Energieaufwand und in kürzester Zeit erhalten werden. Außerdem sollte ein Material dafür verwendbar sein, das in großen Mengen zur Verfügung gestellt werden kann und vielseitig einsetzbar ist. Die Verwendung von Polyimid ist hierbei von großer Bedeutung.

So war es Aufgabe der vorliegenden Erfindung, ein Verfahren bereit zu stellen, Presskörper aus Polyimid kostengünstig und sicher herstellen zu können.

Vollkommen überraschend wurde ein Verfahren gefunden, das Polyimid Presskörper in deutlich kürzerer Zeit erzielt, als die bekannten Verfahren des Formpressens bzw. Sinterns und ohne dass dazu ein Plasma gezündet und aufrecht erhalten werden muss.

Gegenstand der Erfindung ist demnach ein Verfahren zur Verdichtung von Polyimid Pulver zu einem Polyimid Presskörper, das durch die Schritte gekennzeichnet ist:
a) Einbringen von Polyimid Pulver in eine elektrisch leitfähige Sinterform,
b) Verdichten des Polyimid Pulvers mittels zumindest eines Pressdruck ausübenden Presswerkzeugs, das elektrisch leitfähig ist, wobei an die Sinterform und an das oder die Presswerkzeuge ein elektrisches Wechselfeld gelegt wird, ohne ein Plasma zu zünden,
c) Entfernen des oder der Presswerkzeuge und Ausstoßen des Polyimid Presskörpers.

Das Verfahren wird im Rahmen der Erfindung mit "elektromagnetisch unterstütztes Sintern" bezeichnet und mit EMSS abgekürzt.

Die Zeitdauer während der Durchführung der Schritte a, b und c wird im Rahmen der Erfindung mit "Prozesszeit" bezeichnet.

Das Verfahren hat den Vorteil, dass der Polyimid Presskörper in wesentlich kürzerer Zeit erhalten wird, als nach der konventionellen Vorgehensweise. So beträgt die Zeitdauer vom Einbringen des Polyimid Pulvers bis zum Ausstoßen des Presskörpers nur etwa 15 bis 25 % der Zeitdauer, die man bei einem konventionellen Pressvorgang benötigen würde, um einen Presskörper gleicher Dichte zu erhalten.

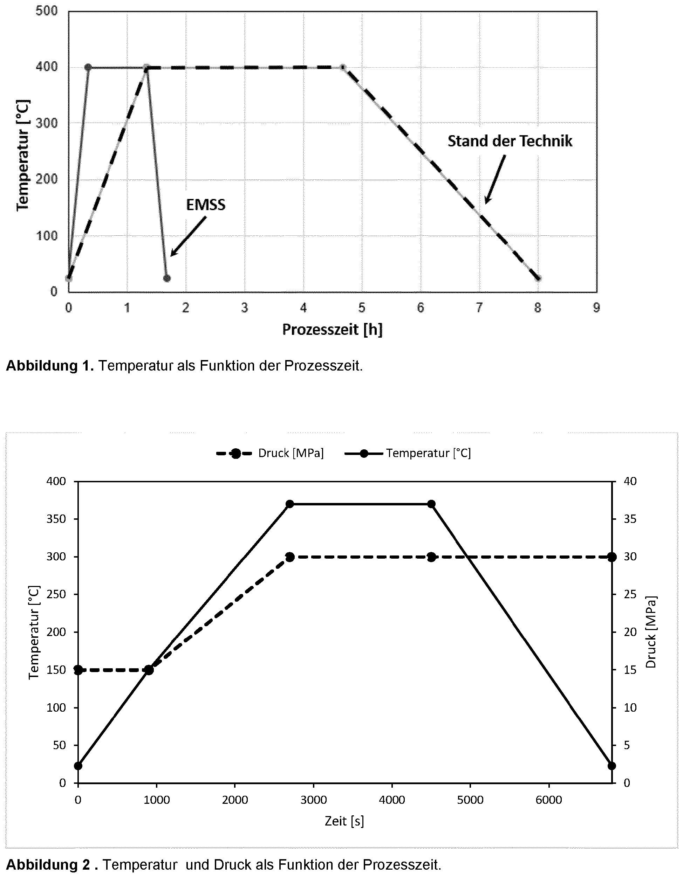

Den Vorteil verdeutlicht schematisch die **Abbildung 1****.** Der Pressvorgang ist abgeschlossen, sobald die Temperatur, die während dessen eingestellt ist, auf den Wert zu Beginn des Pressvorganges zurück gegangen ist, gleichbedeutend damit, dass der Presskörper ausgestoßen werden kann.

Das Verfahren kann in konventionellen Vorrichtungen für das Formpressen für Kunststoffe oder auch in Vorrichtungen für das Spark Plasma Sintering durchgeführt werden. Die Funktionsteile einer solchen Vorrichtung und deren prinzipielle Anordnung sind z.B. im Aufsatz von Olivier Guillon et al., "Field-Assisted Sintering Technology/Spark Plasma Sintering", Advanced Engineering Materials, Seite 830 ff., DOI: 10.1002/adem.201300409, vorgestellt.

Im Folgenden wird das erfindungsgemäße Verfahren näher erläutert.

Die elektrisch leitfähige Sinterform weist vorzugsweise Graphit auf oder besteht aus Graphit. Die Auswahl an Graphit Material, das die Sinterform aufweist oder aus dem die Sinterform besteht, ist dem Fachmann bekannt. Weiterhin bevorzugt sind Sinterformen, die hitzebeständigen Stahl und/oder eine Titan-Zirkonium-Molybdän-Legierung (TZM) aufweisen oder aus diesen bestehen. Ebenfalls bekannt ist die Auswahl der Sinterform sowie des Presswerkzeugs, die dem zu einem Presskörper verdichteten Polyimid die gewünschte Form verleihen.

Es kann vorteilhaft sein, zumindest Schritt b des erfindungsgemäßen Verfahrens unter Vakuum durchzuführen, vorzugsweise unter einem Druck von 10 bis 100 hPa.

Des Weiteren kann zumindest Schritt b unter Inertgasatmosphäre durchgeführt werden, vorzugsweise unter Stickstoff.

Während der Durchführung des Schrittes b wird an die Sinterform und an das oder die Presswerkzeuge ein elektrisches Wechselfeld gelegt, ohne ein Plasma zu zünden. Dazu werden die Sinterform und das oder die Presswerkzeuge in einer dem Fachmann bekannten Weise elektrisch kontaktiert, so dass das elektrische Wechselfeld einen Stromdurchfluss bewirkt.

Alternativ oder zugleich kann der Stromdurchfluss mittels Induktion realisiert werden.

In beiden Möglichkeiten entsteht durch den Wechselstrom Wärme. Die Temperatur der Sinterform, des oder der Presswerkzeuge und des Polyimidpulvers kann somit kontrolliert werden. Vorzugsweise ist die Temperatur der Sinterform und des oder der Presswerkzeuge die gleiche. Indem Spannung und Stromstärke des elektrischen Wechselfeldes als Stellgrößen gefahren werden, wird die Temperatur bzw. die Sintertemperatur eingestellt.

Die Begriffe "erhöhte Temperatur" und "Sintertemperatur" sind im Rahmen der Erfindung gleichbedeutend mit der Temperatur, bei der das Polyimidpulver sintert. Die für das Sintern erforderlichen Eigenschaften des Pulvers und die Vorgänge zwischen den Partikeln, aus denen das Pulver besteht, sind dem Fachmann bekannt. Insbesondere müssen diese Partikel die Fähigkeit aufweisen, Sinterhälse auszubilden. Solche Sinterhälse kommen beim Erreichen der für das jeweilige Material charakteristischen Sintertemperatur durch Diffusionsvorgänge zustande.

Zumindest der Schritt b des Verfahrens kann vorzugsweise unter erhöhter Temperatur durchgeführt werden, vorteilhaft bei einer Temperatur von Raumtemperatur bis 500 °C, besonders bevorzugt von 180 °C bis 420 °C. Ganz besonders bevorzugt kann der Schritt b des erfindungsgemäßen Verfahrens bei einer Temperatur von 380 °C bis 420 °C durchgeführt werden.

Es kann vorteilhaft sein, in dem Schritt b des erfindungsgemäßen Verfahrens das elektrische Wechselfeld mit einer Spannung von 1 V bis 300 V und einer Stromstärke von 0,1 A bis 100 A und einer Frequenz von 10 bis 100 Hz zwischen der Sinterform und zumindest einem Presswerkzeug anzulegen, oder, falls zwei Presswerkzeuge eingesetzt werden, zwischen zwei Presswerkzeugen, oder zwischen den zwei Presswerkzeugen und der Sinterform.

Ganz besonders bevorzugt kann die Frequenz des elektrischen Wechselfeldes die Frequenz des örtlichen Stromnetzes sein, gemessen während der Durchführung des Verfahrens. Es ist jede andere Frequenz aus dem Stand der Technik möglich. Ganz besonders bevorzugt weist das Wechselfeld eine Frequenz von 50 Hz und/oder eine Wechselspannung von 236 V und eine Wechselstromstärke von 56 A auf. Die Messung und Einstellung dieser Größen sind dem Fachmann bekannt.

Es kann weiterhin vorteilhaft sein, zumindest während Schritt b, vorzugsweise während der Schritte a und b des erfindungsgemäßen Verfahrens an der Sinterform und/oder an dem oder den Presswerkzeugen die Temperatur einzustellen, indem die Temperatur beginnend bei Raumtemperatur mit einer Rate von 0,05 bis 0,25 °C/s, bevorzugt von 0,15 °C/s gefahren wird, bis die Sintertemperatur erreicht ist, die vorzugsweise im Bereich von 180 bis 420 °C liegt, und anschließend während einer Zeitdauer von 100 bis 5000 s, bevorzugt von 1800 s zu halten, und anschließend während einer Zeitdauer von 50 bis 3600 s, bevorzugt von 2200 bis 2600 s auf eine Temperatur von Raumtemperatur bis 150 °C abzubauen.

Unter der Raumtemperatur wird im Rahmen der Erfindung 23 °C verstanden.

Die Temperatur kann auf einen Wert von Raumtemperatur bis 150 °C abgebaut werden. Vorzugsweise kann die Temperatur auf einen Wert über der Raumtemperatur abgebaut werden. Dies hat den Vorteil, dass im Schritt c des Verfahrens der Polyimid Presskörper bereits bei erhöhten Temperaturen ausgestoßen werden kann, so dass nicht gewartet werden muss, bis Raumtemperatur erreicht ist.

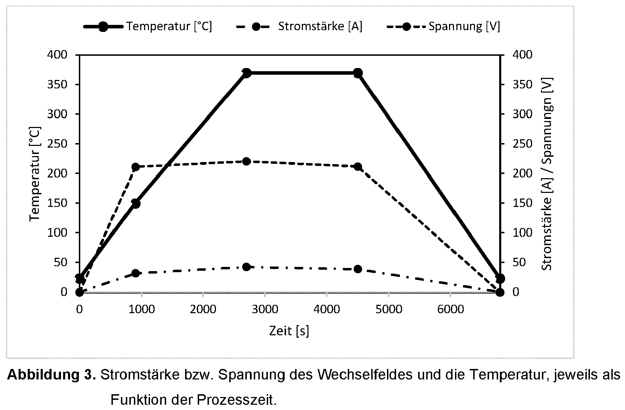

Die Temperatur wird gefahren bzw. die Sintertemperatur eingestellt, indem Spannung und Stromstärke des elektrischen Wechselfeldes als Stellgrößen gefahren werden. Werden Spannung und Stromstärke jeweils bei Null beginnend erhöht, so steigt die Temperatur. Werden Spannung und/oder Stromstärke gesenkt, sinkt die Temperatur. Auf diese Weise kann vorteilhaft die Temperatur gefahren werden. Die **Abbildung 3** zeigt den Zusammenhang zwischen der eingestellten Spannung bzw. Stromstärke des Wechselfeldes bei 50 Hz und der somit eingestellten Temperatur während des Schrittes b.

Zum Abschluss des Schrittes b und vor Schritt c können Stromstärke und Spannung des elektrischen Wechselfeldes vorzugsweise auf Null abgesenkt werden.

Vorzugsweise werden Spannung und Stromstärke simultan gefahren. Weiterhin ist bevorzugt, während Anfahren, Halten und Abbau der Temperatur eine konstante Frequenz, besonders bevorzugt 50 Hz einzusetzen.

Es kann vorteilhaft sein, die Sinterform zusätzlich mit einer konventionellen Isolierung zu versehen, beispielsweise mit Graphitwolle, oder mittels sogenannter carbon-fiber-reinforced carbon Platten

(CFC). Diese bewirken einen zusätzlichen elektrischen Widerstand, der das Wechselfeld beeinflusst. Es kann ebenfalls vorteilhaft sein, Trennmittel einzusetzen, etwa, um im Schritt c des Verfahrens das Ausstoßen zu erleichtern. Auch diese Trennmittel, beispielsweise Bornitridspray, haben einen Einfluss auf die benötigte Stromstärke und Spannung.

In dem Verfahren kann es weiterhin vorteilhaft sein, im Schritt b einen Pressdruck aufzuwenden, der von 1 bis 40 MPa beträgt, vorzugsweise von 5 bis 30 MPa. Der maximale Druck, den die Graphitform aushält, ist dem Fachmann bekannt.

In dem erfindungsgemäßen Verfahren wird der Pressdruck vorzugsweise aufgewandt, indem der Druck beginnend bei der Hälfte des Pressdruckes mit einer Pressgeschwindigkeit von 0,1 bis 1 MPa/min, bevorzugt von 0,5 MPa/min angefahren wird, bis der Pressdruck erreicht ist, und anschließend während einer Zeitdauer von 30 bis 90 min, bevorzugt von 60 min gehalten, und anschließend während einer Zeitdauer von 0 bis 1,5 s, bevorzugt von 1 s, auf Null abgebaut wird.

Vorzugsweise werden in dem erfindungsgemäßen Verfahren die Temperatur zeitgleich mit dem Druck gefahren, besonders bevorzugt während der Durchführung des Schrittes b.

Die Erfindung wird im Folgenden anhand eines Beispiels erläutert.

### Beispiel 1: Herstellung eines Polyimid Presskörpers

Polyimid Pulver mit einer Partikelgröße d_{50%} jeweils von 400 µm, 30 µm bzw. 4 µm wurde jeweils zu einem zylindrischen Presskörper verdichtet. Es handelte sich um Polyimid P84^{®}NT HCM granulated, P84^{®}NT HCM Fine bzw. P84^{®}NT HCM Superfine, alle diese Pulver erhältlich bei Evonik Industries AG, Rellinghauser Strasse 1-11, 45128 Essen. Die nachfolgend geschilderte Vorgehensweise war bei allen diesen Pulvern die gleiche.

Zu Beginn des Schrittes b des Verfahrens wurde ein Druck von 15 MPa eingestellt, der während einer Zeitdauer von 1000 s gehalten wurde. Anschließend wurde der Druck während einer Zeit von 1900 s auf den Pressdruck von 30 MPa gesteigert. Dieser Pressdruck wurde während der Zeit von 4000 s gehalten.

Zugleich zu Beginn des Schrittes b des Verfahrens wurde die Temperatur von 23 °C während der Zeitdauer von 2900 s auf375 °C gesteigert. Diese Temperatur wurde während der Zeit von 1700 s gehalten. Anschließend wurde die Temperatur auf 23°C während der Zeitdauer von 2300 s herunter gefahren.
Den Ablauf des Schrittes b des Verfahrens zeigt schematisch die **Abbildung 2****.**

## Patentansprüche

1. Verfahren zur Verdichtung von Polyimid Pulver zu einem Polyimid Presskörper, **gekennzeichnet durch** die Schritte
a) Einbringen von Polyimid Pulver in eine elektrisch leitfähige Sinterform,
b) Verdichten des Polyimid Pulvers mittels zumindest eines Pressdruck ausübenden Presswerkzeugs, das elektrisch leitfähig ist, wobei
an die Sinterform und an das oder die Presswerkzeuge ein elektrisches Wechselfeld gelegt wird, ohne ein Plasma zu zünden,
c) Entfernen des oder der Presswerkzeuge und Ausstoßen des Polyimid Presskörpers.

2. Verfahren nach Anspruch 1, wobei zumindest Schritt b unter Vakuum durchgeführt wird, vorzugsweise unter einem Druck von 10 bis 100 hPa.

3. Verfahren nach einem der vorhergehenden Ansprüche, wobei zumindest Schritt b unter Inertgasatmosphäre durchgeführt wird, vorzugsweise unter Stickstoff.

4. Verfahren nach einem der vorhergehenden Ansprüche, wobei zumindest Schritt b unter erhöhter Temperatur durchgeführt wird, vorzugsweise bei einer Temperatur von Raumtemperatur bis 500 °C, besonders bevorzugt von 180 °C bis 420 °C.

5. Verfahren nach einem der vorhergehenden Ansprüche, wobei im Schritt b das elektrische Wechselfeld
mit einer Spannung von 1 V bis 300 V und einer Stromstärke von 0,1 A bis 100 A und einer Frequenz von 10 bis 100 Hz
zwischen der Sinterform und zumindest einem Presswerkzeug angelegt wird, oder, falls zwei Presswerkzeuge eingesetzt werden,
zwischen zwei Presswerkzeugen, oder zwischen zwei Presswerkzeugen und der Sinterform.

6. Verfahren nach einem der vorhergehenden Ansprüche, wobei
zumindest während Schritt b, vorzugsweise während der Schritte a und b an der Sinterform und/oder an dem oder den Presswerkzeugen die Temperatur eingestellt wird, indem die Temperatur
beginnend bei Raumtemperatur mit einer Rate von 0,05 bis 0,25 °C/s, bevorzugt von 0,15 °C/s
gefahren wird,
bis die Sintertemperatur erreicht ist, die vorzugsweise im Bereich von 180 bis 420 °C liegt, und anschließend
während einer Zeitdauer von 100 bis 5000 s, bevorzugt von 1800 s gehalten, und anschließend während einer Zeitdauer von 50 bis 3600 s, bevorzugt von 2200 bis 2600 s auf eine Temperatur von Raumtemperatur bis 150°C abgebaut wird.

7. Verfahren nach zumindest einem der vorherigen Ansprüche, wobei im Schritt b ein Pressdruck aufgewandt wird, der von 1 bis 40 MPa beträgt, vorzugsweise von 5 bis 30 MPa.

8. Verfahren nach Anspruch 7, wobei der Pressdruck aufgewandt wird, indem der Druck beginnend bei der Hälfte des Pressdruckes mit einer Pressgeschwindigkeit von 0,1 bis 1 MPa/min,
bevorzugt von 0,5 MPa/min angefahren wird,
bis der Pressdruck erreicht ist, und anschließend
während einer Zeitdauer von 30 bis 90 min, bevorzugt von 60 min gehalten, und anschließend
während einer Zeitdauer von 0 bis 1,5 s, bevorzugt von 1 s, auf Null abgebaut wird.
